Europäisches Patentamt

European Patent Office

Office européen des brevets

(19)

(11) Publication number: **0 012 556**
**B1**

(12) **EUROPEAN PATENT SPECIFICATION**

(45) Date of publication of patent specification: **10.08.83**

(51) Int. Cl.³: **F 16 J 15/40, F 16 C 33/82**

(21) Application number: **79302786.3**

(22) Date of filing: **04.12.79**

(54) **Magnetic liquid shaft seal.**

(30) Priority: **11.12.78 US 968370**

(43) Date of publication of application:
**25.06.80 Bulletin 80/13**

(45) Publication of the grant of the patent:
**10.08.83 Bulletin 83/32**

(84) Designated Contracting States:
**BE CH DE FR GB NL SE**

(56) References cited:
**DE - A - 2 628 831**
**GB - A - 783 881**
**US - A - 2 557 140**
**US - A - 2 974 981**
**US - A - 3 612 549**
**US - A - 3 620 584**
**US - A - 3 740 060**
**US - A - 3 848 879**

**H. REINBOTH "Technologie und Anwendung magnetischer Werkstoffe" 1970, VEB VERLAG TECHNIK, Berlin page 351**

(73) Proprietor: **Ezekiel, Frederick D.**
**75 Allen Street**
**Lexington Massachusetts 02173 (US)**

(72) Inventor: **Ezekiel, Frederick D.**
**75 Allen Street**
**Lexington Massachusetts 02173 (US)**

(74) Representative: **Jennings, Roy Alfred et al,**
**GILL JENNINGS & EVERY 53-64 Chancery Lane**
**London WC2A 1HN (GB)**

Courier Press, Leamington Spa, England.

# Magnetic liquid shaft seal

The present invention relates to a magnetic liquid sealing device which forms a seal between a shaft and a surrounding housing. The device comprises a disc-like permanent magnet, means sealing the disc-like magnet to the housing or the shaft, and a closed loop of magnetic liquid sealing the disc-like magnet to the shaft or to the housing respectively, the closed loop of magnetic liquid extending around an inner periphery of the disc-like magnet, which is in the form of a ring when it seals the disc-like magnet to the shaft, and extending around an outer periphery of the disc-like magnet when it seals the disc-like magnet to the housing.

One example of a magnetic liquid sealing device such as this is disclosed in US Patent specification No. 3,612,549. In this example, the disc-like permanent magnet is in the form of a ring and it has only a single pole around its inner periphery. The magnetic circuit which holds the closed loop of magnetic liquid in position extends from this pole, through the magnetic sealing liquid, through a shaft against which the seal is made and then to an opposite pole of a second disc-like permanent magnet.

Since the shaft against which the seal is made forms part of the magnetic circuit through the magnetic sealing liquid, this form of seal can only be used with a shaft which is made of magnetic material. What is more, at least two separate disc-like permanent magnets of opposite polarity are required.

Another example of a magnetic liquid sealing device is disclosed in DE—A—26 28 831. In this example, there are two disc-like magnets arranged face to face with a narrow space between them. Both discs are magnetised axially with a North Pole on one face and a South Pole on the other face. The magnetic liquid is not held around the edge of either of the disc-like magnets, but in the narrow space between the edges of the two disc-like magnets and the magnetic field passes from a North Pole on one face of the one magnet through the liquid to a South Pole on the adjacent face of the other magnet. Since the magnetic field does not pass through the shaft or housing, this form of seal can be used with shafts and/or housings made of non-magnetic material. However this form of seal calls for two disc-like magnets, which are arranged side by side and are magnetically insulated from each other, to hold a single closed loop of magnetic liquid.

The object of this invention is to simplify magnetic liquid sealing devices which can be used with non-magnetic shafts and/or housings so that only a single disc-like magnet is required to hold the closed loop of magnetic liquid in position.

To this end according to this invention, a device as initially described is characterised in that the disc-like magnet is magnetised axially with a North Pole on one face and a South Pole on the opposite face, as is known per se, and in that the loop of magnetic liquid is held around a peripheral edge of the disc-like magnet by a magnetic field which passes directly from the pole on the one face of the disc-like magnet, through the magnetic liquid and directly back to the pole on the opposite face of the disc-like magnet.

The arrangement in accordance with the invention stems from the discovery that when a small amount of magnetic liquid is brought into contact with the peripheral edge of a single axially magnetised disc-like permanent magnet, the magnetic liquid distributes itself evenly all around the edge. The surface shape in the cross-section of the closed loop of magnetic liquid which is thus formed is determined by the magnetic flux lines between the opposite poles located one on each face of the disc-like permanent magnet. In the case of a permanent magnet in the form of a ring, magnetic liquid will distribute itself around either the inner or the outer periphery of the ring, or both. Thus a moving seal can be achieved either between the outer edge of the ring and an external housing, or between the inner edge of the ring and a shaft. The stability of the seal is a function of several parameters, such as the gap, in which the liquid is located, between the disc-like magnet and the adjoining surface, the magnetic permeability of the liquid, and the nature and strength of the permanent magnet.

Advantages of the device in accordance of the invention include its extreme simplicity and low cost. The permanent magnet can be made quite thin, for example as little as 75 microns thick, so that it is inexpensive and can be used in narrow spaces where other seals cannot fit.

Because of its inherent simplicity, a sealing device in accordance with the invention has a relatively low differential pressure holding capability and is useful as an exclusion seal.

Some examples of sealing devices in accordance with the invention will now be described with reference to the accompanying drawings in which:—

Figure 1 is a diametric section through a circular magnet disc with magnetic liquid held around its periphery;

Figure 2 is a diametric section through a permanent magnet ring or washer with magnetic liquid held around its outer and its inner peripheries;

Figure 3 is a diagrammatic diametric section through a simple example of the device in accordance with the invention fitted between a rotary shaft and stationary housing;

Figure 4 is a view similar to Figure 3, but of a second example;

Figure 5 is a view similar to Figure 3, but of a third example;

Figure 6 is a view similar to Figure 3, but of a fourth example; and,

Figure 7 is a view similar to Figure 3, but of a fifth example.

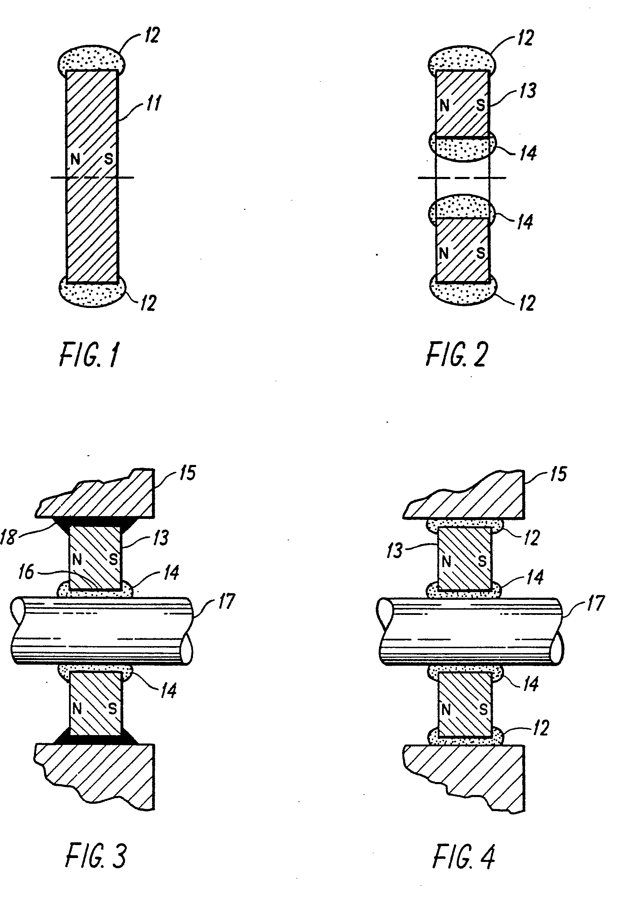

With reference now to Figure 1, there is shown a diametric sectional view of a circular disc 11 made of a permanent magnet material. The disc 11 is magnetized with its magnetic axis extending axially of the disc. Magnetic liquid 12 is shown held magnetically around the circumferential edge of the disc 11.

Figure 2 shows a sectional view of a circular washer 13 made of permanent magnet material magnetized with its magnetic axis in the axial direction. Magnetic liquid 12 is shown held magnetically around the outer circumferential edge of the washer 13. In addition, magnetic liquid 14 is shown held magnetically around the inner circumferential edge of the washer 13.

Figure 3 shows an example of a sealing device in accordance with the invention used to seal a rotary shaft 17 in a stationary housing 15. The magnetic ring or washer 13 is fixed and sealed to the housing 15. The shaft 17, which is rotatably mounted in the housing 15, protrudes through the central opening 16 in the permanent magnet ring 13. Magnetic liquid 14 is held between the outer surface of the shaft 17 and the inner circumferential edge of the ring 13, thus forming a seal between the ring 13 and the shaft 17 and hence between the shaft 17 and the housing 15. Adhesive sealant 18 permanently seals and fixes the ring 13 to the housing 15.

Figure 4 illustrates how the permanent magnetic ring 13 can seal around both its outer and inner circumferential edges. Captive magnetic liquid 12 forms a seal between the outer circumferential edge of the ring 13 and the housing 15, and further captive magnetic liquid 14 forms a seal between the inner circumferential edge of the ring 13 and the shaft 17.

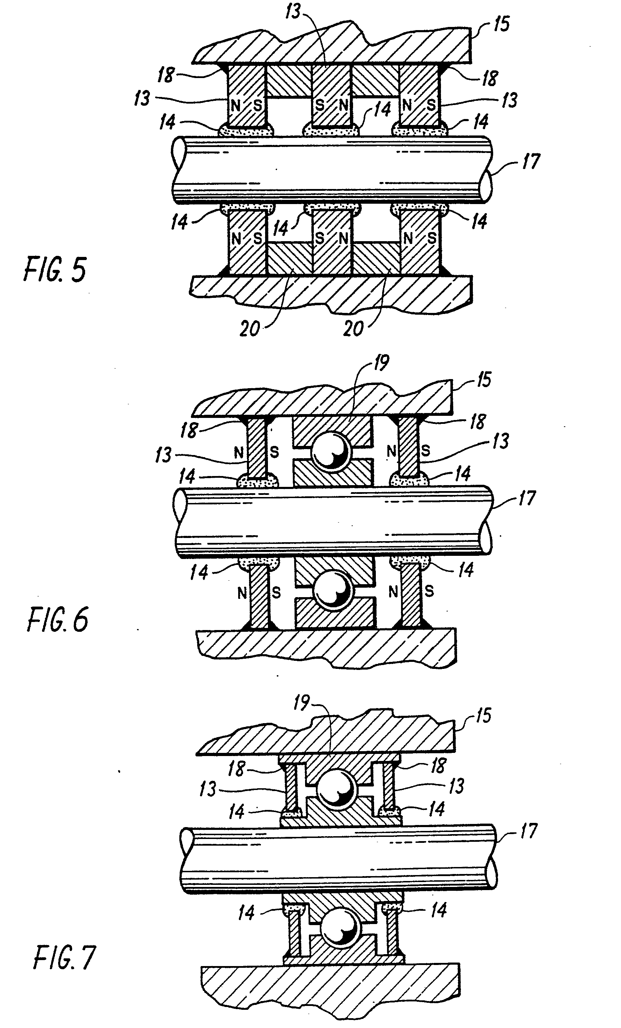

In the example of Figure 5, several permanent magnetic rings 13 are arranged in series to achieve sealing against higher pressures. Each ring 13 is held on the housing 15, the end rings being sealed to the housing, and non-magnetic spacer rings 20 are fitted between the rings 13.

Figure 6 illustrates an embodiment of the invention for sealing a ball bearing. Here, permanent magnetic rings 13 are located one on each side of a ball bearing 19. Magnetic liquid 14 held around the inner circumferential edges of the rings 13 forms a rotary seal against the shaft 27. A fixed seal 18 of each of the outer circumferential edges of the rings 13 to the housing 15 completes a sealed chamber around the ball bearing. Thus, the shaft 17 can rotate without introducing a leak path to the bearing 19.

Figure 7 illustrates another arrangement for sealing a ball bearing. In this example, the inner and outer races of the ball bearing 19 are axially elongated to accommodate magnetic rings 13. Magnetic liquid 14 is held on the inner circumferential edge of each ring 13 and forms a moving seal against the inner bearing race. The outer circumferential edge of each ring 13 is fixed and sealed to the outer race of the bearing 19 as shown at 18. Alternatively the ring 13 may be fixed and sealed to the inner race and have magnetic liquid forming a moving seal against the outer race.

The permanent magnetic ring or disc may have an axial thickness of from 75 to 2600 microns and it may be made of nylon filled with ferrite.

## Claims

1. A magnetic liquid sealing device forming a seal between a shaft (17) and a surrounding housing (15), the device comprising a disc-like permanent magnet (11, 13), means (18) sealing the disc-like magnet to the housing (15), or the shaft (17), and a closed loop of magnetic liquid (12, 14) sealing the disc-like magnet (11, 13) to the shaft (17) or to the housing (15) respectively, the closed loop of magnetic liquid (14) extending around an inner periphery of the disc-like magnet (13), which is in the form of a ring when it seals the disc-like magnet (13) to the shaft (17), and extending around an outer periphery of the disc-like magnet (11) when it seals the disc-like magnet (11) to the housing (15), characterized in that the disc-like magnet (11, 13) is magnetised axially with a North Pole on one face and a South Pole on the opposite face in a manner known per se and in that the loop of magnetic liquid (12, 14) is held around a peripheral edge of the disc-like magnet by a magnetic field which passes directly from the pole on the one face of the disc-like magnet (11, 13), through the magnetic liquid (12, 14) and directly back to the pole on the opposite face of the disc-like magnet (11, 13).

2. A device according to Claim 1, in which the permanent magnet is in the form of a ring, characterized in that the sealing means (18) is fixed sealing means which fixes the outer periphery of the ring to the housing.

3. A device according to Claim 1, in which the permanent magnet is in the form of a ring, characterized by two closed loops of magnetic liquid (12, 14) held magnetically around both peripheries of the ring (13), whereby relative rotation can take place between the ring (13) and the housing (15) and between the ring (13) and the shaft (17).

4. A device according to any one of Claims 1 to 3, characterized by a plurality of the permanent magnets in the form of rings (13) spaced apart along the shaft (17), each of the rings (13) having a closed loop of magnetic liquid (14) held around its inner periphery in contact with the shaft (17).

5. A device according to Claim 4, characterized by a ball bearing (19) supporting the shaft between the rings (13).

6. A device according to Claim 1 or Claim 2, characterised in that the shaft (17) comprises an inner race of a ball bearing (19) and the housing (15) comprises an outer race of the ball bearing (19) and the seal is formed between the two races.

7. A device according to any one of the preceding Claims, characterized in that the or each permanent magnet has an axial thickness in the range of from 75 to 2600 microns.

8. A device according to any one of the preceding Claims, characterized in that the or each permanent magnet comprises nylon filled with ferrite.

## Revendications

1). Dispositif d'étanchéité à fluide magnétique formant un joint étanche entre un arbre (17) et un carter (15) entourant cet arbre, le dispositif comprenant un aimant permanent en forme de disque (11, 13), des moyens (18) assurant l'étanchéité entre l'aimant en forme de disque et le carter (15) ou l'arbre (17), et une boucle fermée de liquide magnétique (12, 14) assurant respectivement l'étanchéité entre l'aimant en forme de disque (11, 13) et l'arbre (17) ou le carter (15), la boucle fermée de liquide magnétique (14) entourant le pourtour intérieur de l'aimant en forme de disque (13), cette boucle se présentant sous la forme d'un anneau lorsqu'elle assure l'étanchéité de l'aimant en forme de disque (13) par rapport à l'abre (17), et entourant le pourtour extérieur de l'aimant en forme de disque (11) lorsqu'elle assure l'étanchéité de ce dernier par rapport au carter (15), dispositif caractérisé en ce que l'aimant en forme de disque (11, 13) est magnétisé axialement pour présenter, de manière connue en soi, un pôle nord sur une face et un pôle sud sur l'autre face, la boucle de fluide ou liquide magnétique (12, 14) étant maintenue autour d'un bord périphérique de l'aimant en forme de disque, par un champ magnétique partant directement du pôle d'une face de l'aimant en forme de disque (11, 13) pour traverser le liquide magnétique (12, 14) et se refermer directement par le pôle de l'autre face de l'aimant permanent en forme de disque (11, 13).

2). Dispositif selon la revendication 1, dans lequel l'aimant permanent se présente sous la forme d'un anneau, dispositif caractérisé en ce que lef moyens d'étanchéité (18) sont fixes et fixent le pourtour extérieur de l'anneau au carter.

3). Dispositif selon la revendication 1, dans lequel l'aimant permanent se présente sous la forme d'un anneau, dispositif caractérisé en ce qu'il comprend deux boucles fermées de liquide magnétique (12, 14) maintenues magnétiquement autour des deux pourtours de l'anneau (13), ce qui permet d'obtenir une rotation relative entre l'anneau (13) et le carter (15), et entre l'anneau (13) et l'arbre (17).

4). Dispositif selon l'une quelconque des revendications 1 à 3, caractérisé en ce qu'il comprend plusieurs aimants permanents se présentant sous la forme d'anneaux (13) espacés le long de l'arbre (17), chacun de ces anneaux (13) présentant une boucle fermée de liquide magnétique (14) maintenue autour de son pourtour intérieur, en contact avec l'arbre (17).

5). Dispositif selon la revendication 4, caractérisé en ce qu'il comporte un roulement à billes (19) supportant l'arbre entre les anneaux (13).

6). Dispositif selon l'une quelconque des revendications 1 et 2, caractérisé en ce que l'arbre (17) comporte le chemin de roulement intérieur du roulement à billes (19) et en ce que le carter (15) comporte le chemin de roulement extérieur du roulement à billes (19), un joint d'étanchéité étant formé entre ces deux chemins de roulement.

7). Dispositif selon l'une quelconque des revendications 1 à 6, caractérisé en ce que l'aimant ou chaque aiment permanent présente une épaisseur axiale de l'ordre de 75 à 2 600 microns.

8). Dispositif selon l'une quelconque des revendications 1 à 7, caractérisé en ce que l'aimant ou chaque permanent est constitué de nylon chargé par une ferrite.

## Patentansprüche

1. Vorrichtung zur Dichtung mittels magnetischer Flüssigkeit zwischen einem Schaft (17) und einem umschließenden Gehäuse (15), bestehend aus einem scheibenförmigen Permanent-Magneten (11, 13), einer Abdichtung (18) des scheibenförmigen Magneten gegen das Gehäuse (15), oder gegen den Schaft (17), und einem geschlossenen, den scheibenförmigen Magneten (11, 13) gegen den Schaft (17) bzw. das Gehäuse (15) abdichtenden, aus der magnetischen Flüssigkeit bestehenden Dichtring (12, 14), der sich, den scheibenförmigen Magnet (13) gegen den Schaft (17) abdichtend, um eine innere Peripherie des scheibenförmigen Magneten (13) erstreckt und sich, den scheibenförmigen Magneten (11) gegen das Gehäuse (15) abdichtend, um eine äußere Peripherie des scheibenförmigen Magneten (11) erstreckt, dadurch gekennzeichnet, daß der scheibenförmige Magnet (11, 13), in an sich bekannter Weise mit einem Nordpol auf der einen und einem Südpol auf der gegenüberliegenden Seite magnetisiert und daß der Ring magnetischer Flüssigkeit (12, 14) durch ein magnetisches Feld, das vom Pol auf der einen Seite durch die magnetische Flüssigkeit (12, 14) direkt zurück zum Pol auf der gegenüberliegenden Seite des scheibenförmigen Magneten (11, 13) verläuft, um den peripheren Rand des scheibenförmigen Magneten (11, 13) gehalten wird.

2. Vorrichtung nach Anspruch 1, mit ringförmigem Permanentmagneten, dadurch gekennzeichnet, daß das die äußere Peripherie des Permanentmagneten mit dem Gehäuse verbindende Dichtungsmittel (18) aus einem festen Dichtungsmittel besteht.

3. Vorrichtung nach Anspruch 1, mit ringförmigem Permanentmagneten, gekennzeichnet durch zwei geschlossene Ringe magnetischer Flüssigkeit (12, 14), die magnetisch um beide Peripherien des ringförmigen Permanentmagneten gehalten werden und dadurch eine relative Rotation zwischen dem Permanentmagneten (13) und dem Gehäuse (15) und zwischen dem Permanentmagneten (13) und dem Schaft (17) ermöglichen.

4. Vorrichtung nach einem der Ansprüche 1 bis 3, gekennzeichnet durch mehrere ringförmige Permanentmagneten (13), mit Abstand entlang dem Schaft (17) angeordnet und jeder mit einem geschlossenen Dichtring (14) magnetischer Flüssigkeit um seine innere Peripherie und in Kontakt mit dem Schaft (17).

5. Vorrichtung nach Anspruch 4, gekennzeichnet durch ein den Schaft tragendes Kugellager (19) zwischen den Permanentmagneten (13).

6. Vorrichtung nach Anspruch 1 oder 2, dadurch gekennzeichnet, daß der Schaft (17) einen inneren und das Gehäuse (15) einen äußeren Laufring eines Kugellagers (19) aufweist und daß die Dichtung zwischen den beiden Laufringen angeordnet ist.

7. Vorrichtung nach einem der voraufgehenden Ansprüche, dadurch gekennzeichnet, daß der oder jeder der Permanentmagneten eine axiale Dicke von 75 bis 2600 Mikron aufweist.

8. Vorrichtung nach einem der voraufgehenden Ansprüche, dadurch gekennzeichnet, daß der oder jeder der Permanentmagneten mit Ferrit gefülltes Nylon enthält.

FIG. 1

FIG. 2

FIG. 3

FIG. 4

1

FIG. 5

FIG. 6

FIG. 7